Europäisches Patentamt

European Patent Office

Office européen des brevets

(11) Publication number: **0 520 479 A1**

# EUROPEAN PATENT APPLICATION

(21) Application number: **92110792.6**

(22) Date of filing: **26.06.92**

(51) Int. Cl.5: **B60R 22/44**

(30) Priority: **28.06.91 JP 49826/91 U**

(43) Date of publication of application:
**30.12.92 Bulletin 92/53**

(84) Designated Contracting States:
**DE FR GB**

(71) Applicant: **FUJI-AUTOLIB COMPANY, LIMITED**
**1461, Ebijima, Ryuyo-cho**
**Iwata-gun, Shizuoka-ken(JP)**

(72) Inventor: **Kondoh, Yoshinobu, c/o Fuji-Autolib**
**Co., Ltd.**
**1461, Ebijima, Ryuyo-cho**
**Iwata-gun, Kanagawa Prefecture(JP)**

(74) Representative: **Weber, Joachim, Dr.**
**Hoefer, Schmitz, Weber, Patentanwälte**
**Ludwig-Ganghofer-Strasse 20**
**W-8022 Grünwald/München(DE)**

(54) **Seat belt retractor.**

(57) A seat belt retractor for a reel shaft (2) includes a housing (14), a spring seat (4) adapted for rotation with the reel shaft and rotatably mounted within the housing, and a ratchet wheel (9) coaxial with the spring seat. The ratchet wheel is rotatably mounted within the housing (14) and has a central hub (10). A main helical spring (12) is connected between the housing (14) and the central hub (10) of the ratchet wheel. An auxiliary helical spring (6) is connected at its outer end to the spring seat (4) and at its inner end to the central hub (10) of the ratchet wheel.

FIG.2

# BACKGROUND OF THE INVENTION

The present invention relates to a seat belt retractor.

Most motor vehicles are equipped with safety belts with seat belt retractors. Such retractors are so designed as to provide a seat belt with a tension high enough to retain passengers on their seat so as to prevent personal damages under emergent conditions such as sudden deceleration, accidental collision or the like. The passengers wearing the seat belt, however, tend to feel uncomfortable due to pressure caused by tension of the seat belt. To alleviate this problem, several measures have been proposed. One of the measures is implemented in seat belt retractors disclosed in Japanese Patent Application Second Publications Nos. 56-15334 and 59-19862. These known seat belt retractors include a housing, a reel shaft rotatably supported within the housing, a ratchet wheel rotatable relative to the reel shaft, two helical springs arranged to bias the reel shaft in a seat belt winding direction, and an actuator for urging a locking pawl in locking engagement with the ratchet wheel. Of the two springs, a main spring with a larger force has its outer end anchored to the housing and its inner end anchored to a hub of the ratchet wheel. The other auxiliary spring with a smaller force has its outer end anchored to an outer peripheral portion of the ratchet wheel and its inner end anchored to the reel shaft.

During winding the seat belt after unbuckling, the main spring expands to cause the ratchet wheel and the outer end of the auxiliary spring to turn in such a direction as to tighten the auxiliary spring. In the process of tightening, a squeaking noise is generated due to rubbing or beating at overlapped portions of the auxiliary spring. There is a demand for reducing the squeaking noise since this makes the passengers to feel uncomfortable.

An object of the present invention is to provide a seat belt retractor which does not generate squeaking noise during winding the seat belt.

# SUMMARY OF THE INVENTION

According to the present invention, there is provided a seat belt retractor comprising a housing, a spring seat adapted for rotation with the reel shaft and rotatably mounted within the housing, a ratchet wheel coaxial with the spring seat, a main helical spring and an auxiliary helical spring. The ratchet wheel is rotatably mounted within the housing and has a central hub. The main helical spring is connected between the housing and the central hub of the ratchet wheel. The auxiliary helical spring has an outer end connected to the spring seat, and an inner end connected to the central hub of the ratchet wheel. The main helical spring has a larger biassing force than that of said auxiliary helical spring.

# BRIEF DESCRIPTION OF THE DRAWINGS

Fig. 1 is a sectional view taken through the line I-I in Fig. 2, showing a seat belt retractor according to the present invention;

Fig. 2 is a sectional view taken through the line II-II in Fig. 1;

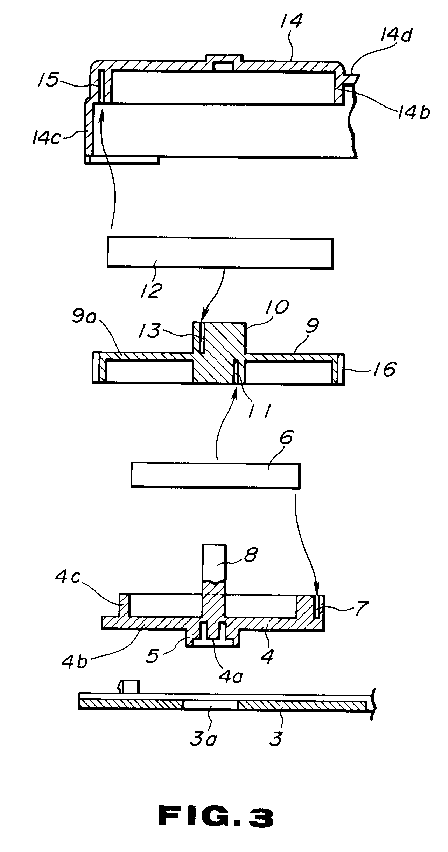

Fig. 3 is an exploded view of the seat belt retractor; and

Fig. 4 is a schematic diagram showing an operative state of the seat belt retractor.

# DESCRIPTION OF THE PREFERRED EMBODIMENT

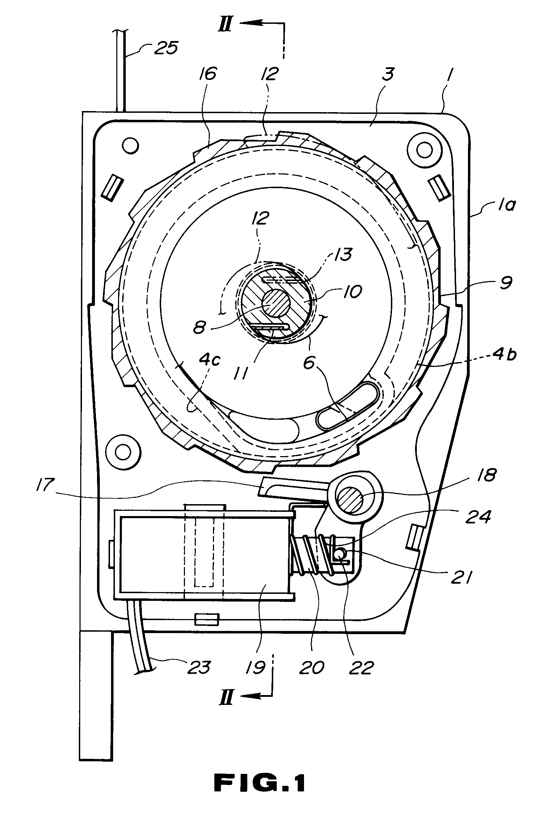

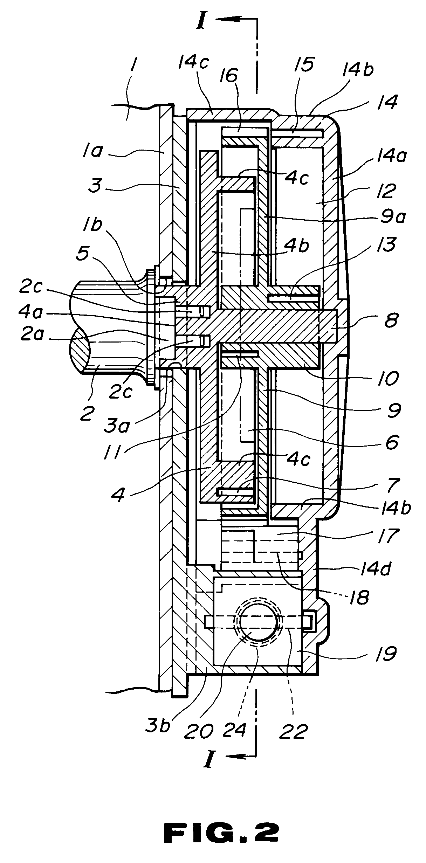

Referring now to Figs. 1 and 2, there is shown a preferred embodiment of a seat belt retractor according to the present invention. As shown in Figs. 1 and 2, rotatably supported on a substantially rectangular frame 1 is a reel shaft 2 of a seat belt winding reel (not shown). The frame 1 has an end plate 1a formed with a hole 1b. Secured to the end plate 1a is a lid 3 with a hole 3a aligned with the hole 1b of the end plate 1a. The lid 3 and a cover 14 cooperate with each other to form a housing. The lid 3 has substantially the same profile as the end plate 1a. As seen in Fig. 2, the lid 3 has a mount site 3b for an actuator 19. The reel is rotatable with the reel shaft 2 and has a seat belt webbing 25 winding therearound. The inner end of the webbing 25 is fixedly attached to a circumferential surface of the reel shaft 2. In order to couple with the seat belt retractor, a projection 2a with pins 2c is formed on one axial end of the reel shaft 2.

The projection 2a with the pins 2c is received in a socket groove 4a formed in a hub 5 of a spring seat 4. The spring seat 4 has a radially extending disk-like portion 4b and a substantially cylindrical collar portion 4c extending axially from a peripheral edge of the disk-like portion 4b. Coaxial with the hub 5 is a shaft 8 which extends from the central portion of the disk-like portion 4b in the opposite direction. The hub 5 has a larger diameter than the shaft 8 does. The collar portion 4c of the spring seat 4 is formed with a slot 7 into which an outer end of an auxiliary helical spring 6 is fixedly received.

Rotatably supported by the shaft 8 is a ratchet wheel 9. The ratchet wheel 9 has teeth 16, a radially extending disk-like portion 9a, a central hub 10 extending from the opposite ends of the disk-like portion 9a. As best seen in Fig. 2, the hub 10 has a portion disposed radially inwardly of the collar portion 4c of the spring seat 4. This portion of the hub 10 is formed with a slot 11 into which an inner end of the auxiliary helical spring 6 is fixedly received. The hub 10 has a central axial bore through which the shaft 8 of the spring seat 4 passes. The auxiliary helical spring 6 encircles the hub 10 counterclockwise as viewed in Fig. 1, and is accommodated in a space between the disk-like portion 4b of the spring seat 4 and the disk-like portion 9a of the ratchet wheel 9 as shown in Fig. 2.

As seen in Fig. 2, the shaft 8 has a free end portion rotatably received in a central recess of the cover 14. The cover 14 has a similar profile to the end plate 1a. The cover 14 has an axial end wall 14a and a cylindrical collar 14b extending inwardly from a circumferential edge of the end wall 14a. The collar 14b is formed with a slot 15 into which an outer end of a main helical spring 12 is received. An inner end of the main helical spring 12 is received into a slot 13 with which the central hub 10 of the ratchet wheel 9 is formed. The main helical spring 12 has a larger biassing force than that of the auxiliary helical spring 6. As seen in Fig. 2, a distance between the slots 13 and 15 for the main helical spring 12 is greater than that between the slots 7 and 11 for the auxiliary helical spring 6. The main helical spring 12 encircles the hub 10 counterclockwise as viewed in Fig. 1, and is accommodated in a space between the disk-like portion 9a of the ratchet wheel 9 and the end wall 14a of the cover 14 as shown in Fig. 2. Axially extending from the collar 14b is an upper axial extension 14c and radially extending downwardly from the collar 14b is a lower extension 14d. The lower extension 14d has an inwardly projecting pin 18. The extensions 14c and 14d are engaged with the lid 3.

An actuator 19 is in the form of a solenoid which includes a plunger 20. The plunger 20 has a hole 21 at one end portion thereof. An L-shaped lock pawl 17 is coupled with the plunger 20 by means of a pin 22 extending through the hole 21. The pawl 17 has at a corner thereof a hole having a larger inner diameter than a diameter of the pin 18 of the cover 14. The pin 18 is fitted into the hole of the pawl 17 such that almost the same inner circumferential portion of the hole of the pawl 17 is always urged against an outer surface of the projection 18 by a return spring 24 wound on the plunger 20. Thus, the pawl 17 is pivotally mounted on the pin 18. The actuator 19 is electrically connected via wiring 23 to a buckle switch (not shown) so that the actuator 19 is energized when the buckle switch is ON after buckling. Energization of the actuator 19 retracts the plunger 20 so that the pawl 17 rotates clockwise as viewed in Fig. 1 into locking engagement with the teeth 16 of the ratchet wheel 9, preventing rotation of the ratchet wheel 9. When the actuator 19 is de-energized by turning off the buckle switch, the plunger 20 projects to its rest position by a force of the return spring 24, so that the pawl 17 rotates counterclockwise out of engagement with the teeth 16.

The pin 18 on which the pawl 17 is pivotably mounted, may be provided on the lid 3 rather than on the cover 14.

After buckling the seat belt, the buckle switch is ON. The actuator 19 is energized to retract the plunger 20, so that the pawl 17 rotates around the pin 18 into loking engagement with the teeth 16 of the ratchet wheel 9. This prevents the ratchet wheel 9 from rotating counterclockwise as viewed in Fig. 1. Therefore, the reel shaft 2 is subject to the force of the auxiliary helical spring 6 only.

Subsequently if the seat belt webbing 25 is pulled with the ratchet wheel 9 locked, the spring seat 4 rotates clockwise as viewed in Fig. 1 and in such a direction as to tighten the auxiliary helical spring 6. Then, releasing the seat belt webbing 25 causes the spring seat 4 to rotate counterclockwise as viewed in Fig. 1 owing to expansion of the auxiliary spring 6. Accordingly, the seat belt webbing 25 is wound on the reel shaft 2 with the relatively small force of the auxiliary spring 6.

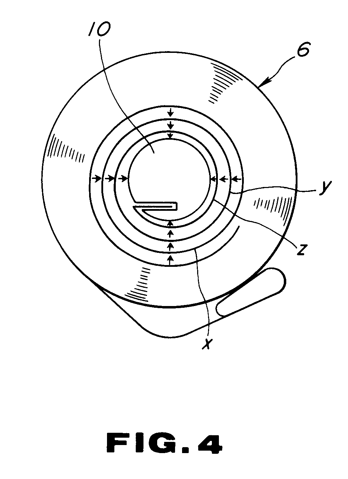

Upon debuckling the seat belt, the buckle switch is turned OFF so that the actuator 19 is deenergized to allow the plunger 20 to return to its projected position. The pawl 17 rotates around the pin 18 counterclockwise as viewed in Fig. 1 out of engagement with the teeth 16 of the ratchet wheel 9. Accordingly, the ratchet wheel 9 is allowed to rotate counterclockwise due to the force of the main helical spring 12. The counterclockwise torque of the ratchet wheel 9 is applied to the spring seat 4 via the auxiliary helical spring 6, causing the spring seat 4 to rotate counterclockwise. As a result, the reel shaft 2 rotates in the seat belt winding direction. In this case, the auxiliary helical spring 6 is tightened around the hub 10 of the ratchet wheel 9 owing to the counterclockwise rotation of the hub 10 prior to rotation of the spring seat 4. The tightening of the auxiliary helical spring 6 progresses outwardly in turn from inner-most, middle to outer-most winding portions as indicated at "z", "y", "x" in Fig. 4. The continuous tightening which starts from the inner-most winding portion of the auxiliary helical spring 6 toward the outer-most winding portion, prevents the adjacent winding portions from rubbing or beating thereagainst. As a result, a squeaking noise is prevented on at least minimized.

## Claims

1.  A seat belt retractor for a reel shaft, comprising:

a housing;

a spring seat adapted for rotation with the reel shaft and rotatably mounted within said housing;

a ratchet wheel coaxial with said spring seat, said ratchet wheel being rotatably mounted within said housing and having a central hub;

a main helical spring connected between said housing and said central hub of said ratchet wheel; and

an auxiliary helical spring having an outer end connected to said spring seat, and an inner end connected to said central hub of said ratchet wheel.

2. A seat belt retractor as claimed in claim 1, wherein said main helical spring has a larger biassing force than that of said auxiliary helical spring.

**FIG.1**

**FIG.2**

**FIG. 3**

**FIG. 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 358 902 (AMERICAN SAFETY EQUIPMENT CORPORATION)<br>* page 3, line 20 - page 5, line 15; figures 1-5 *<br>* page 6, line 31 - page 7, line 13; figure 6 *<br>--- | 1,2 | B60R22/44 |
| A | US-A-4 711 408 (MORI)<br>* column 1 - column 4, line 50; figures 1-4 *<br>----- | 1,2 | |

TECHNICAL FIELDS
SEARCHED (Int. Cl.5 )

B60R

The present search report has been drawn up for all claims

| Place of search | Date of completion of the search | Examiner |
|---|---|---|
| THE HAGUE | 19 OCTOBER 1992 | DUBOIS B.F.J. |